# EUROPEAN PATENT SPECIFICATION

(11) **EP 0 393 172 B1**
(45) Date of publication and mention of the grant of the patent: **03.02.1993**
(21) Application number: 89909937.8
(22) Date of filing: 01.08.1989
(51) Int. Cl.: G01M 3/18

(54) **SENSORS FOR DETECTING AND LOCATING LIQUID LEAKS**
SENSOR ZUR AUFSPÜRUNG UND LOKALISIERUNG VON FLÜSSIGKEITSUNDICHTIGKEITEN
CAPTEURS DE DETECTION ET DE LOCALISATION DE FUITES DE LIQUIDES

(30) Priority: 01.08.1988 US 226644; 17.08.1988 US 233305
(43) Date of publication of application: 24.10.1990
(73) Proprietor: W.L. GORE & ASSOCIATES, INC., Newark, Delaware 19714-9206 (US)
(72) Inventor: SAHAKIAN, Jack, Albert, Flagstaff, AZ 86004 (US)
(74) Representative: Klunker . Schmitt-Nilson . Hirsch
(86) International application number: PCT/US89/03311
(87) International publication number: WO 90/01687

(56) References cited:
- DE-A- 3 441 924
- US-A- 3 981 181
- US-A- 4 206 632
- Oil & Gas Journal, vol. 78, no. 6, 11 February 1980, E. Seaton: "Pipelines laid after 6-year struggle", pages 119-120

## Description

### FIELD OF THE INVENTION

The present invention relates to electrical liquid leak detector cables for detecting and locating liquid chemical product leaks especially hydrocarbon products, and/or water, particularly from pipelines or storage tanks.

### BACKGROUND OF THE INVENTION

Storage or pipeline leaks of hydrocarbon and other chemical products can cause contamination of ground water. Conversely, water leaking into storage tanks and pipelines can cause contamination. There is a need for detection of leaks during storage and pipe transportation of liquid chemical products such as oils, crude oil, refined petroleum products, gasoline, kerosene, organic solvents and the like. In addition, a device to detect water that might leak into electrical equipment is desirable.

One method of detection has been to run a pair of conductors along underground oil or chemical pipelines using insulation between the conductor wires that allows permeation of chemicals. On leakage from a pipe, the chemicals enter the insulation causing the electrical characteristics between the conductors to change. By using time domain reflectometry (TDR) pulse reflecting electronic means, an electrical pulse is sent into the conductor and the reflected wave of the pulse is observed. Any changes in the characteristic impedance of the cable due to a change in the dielectric constant of the insulation is recorded and the location determined.

In the patent document US-A-3 981 181 a leak detecting cable of the coaxial type is disclosed which consists of an inner conductor insulated with a porous insulating material in a given thickness, an outer conductor of served or braided wires around the inner conductor, and if necessary, a porous outer covering and/or protective jacket outside the outer conductor. If leakage occurs, the leaked liquid permeates into fine pores of the porous insulating material separating the two conductors from each other and varies the characteristic impedance of this cable in some detectable extent.

From the patent document DE-A1-3 441 924 a similar leak detecting cable is known comprising a first and a second electrical conductor being arranged in a substantially coaxial relation to each other.

The first conductor is a core conductor and the second conductor is permeable to the liquid to be detected, e.g. oil. The known cable comprises further an insulating layer adjacent to the first conductor, where the insulating layer lets oil through but is impermeable to water, and a protective layer adjacent to the second conductor where the protection layer lets also oils through but stops water.

Therefore, in this known cable construction only oils gets through to the insulation layer adjacent to the first conductor because water is stopped at the protection layer. Thus, only oil changes the dielectric properties of the insulating layer in this known leak detecting cable.

There is a need for devices that can detect and locate not only multiple leaks of hydrocarbon products and other chemical products but also leaks of water, exactly and continuously over long distances. There is a need to detect and locate such hydrocarbons and chemicals and/or water in one cable construction without shorting the circuit, thus enabling the detection and location of multiple leaks.

In accordance with the present invention, a sensor cable for detecting liquid leakage comprises:
a first and second electrical conductor each in substantially coaxial relation to each other, the first conductor being a core conductor, the second conductor having a construction that is porous enough to permit passage of liquid chemical and water,
a first insulation layer adjacent to the first conductor, said first insulation layer being porous enough to permit passage of liquid chemicals and being hydrophobic so that it is impermeable to liquid water,
a second insulation layer positioned between the first insulation layer and the second conductor, said second insulation layer being water permeable, and a protective insulation cover that is porous enough to permit passage of water and liquid chemicals, said cover comprising the outer portion of the cable whereby each successive outer layer surrounds the preceding inner layer.

According to a further development of the invention, the sensor cable further comprises a third insulation layer surrounding directly the core conductor and being porous enough to permit passage of liquid chemicals and a third electrical conductor having a fluid-permeable construction, which permits passage of liquid chemicals, the third conductor being positioned between the third insulation layer and first insulation layer.

Further embodiments of the invention are defined in claims 3 - 8, respectively.

The devices of this invention operate through detection of a change in the characteristic impedance of a circuit caused by a change in the dielectric of insulative materials between circuit conductors.

In the one embodiment, the cable assembly employs one circuit and is used for detecting leaks of water or water solutions.

In this embodiment, that detects only water and water solutions, such as aqueous acidic or alkaline solutions, only two conductors are present. One is the core, or primary conductor. The other is a fluid-permeable conductor construction. The two are separated by the first insulation layer that is non-porous to liquid water but is per-' meable to liquid chemical products. Preferably it is a hydrophobic microporous insulation. Next to the hydrophobic insulation is the second insulation layer that is porous to liquid water. Surrounding all the layers is the final insulating layer of protective insulation cover.

In the second embodiment, two circuits are employed, one for detecting non-conductive liquid chemicals, and one for detecting water and water solutions. The circuits are arranged such that contact and sensing of leaks will not affect continued operation of the circuit, or in the case of the two circuit embodiment, operation of both circuits.

The second embodiment of this invention comprises the first, the second and additionally a third electrical conductor arranged substantially parallel with each other. First of all, the core, or primary conductor is separated from the third fluid-permeable conductor construction, preferably a braided conductor, by a third porous insulation layer that is porous to non-conductive chemicals such as hydrocarbons or organic solvents. The set of first and third conductors comprises one circuit of the cable construction of the invention. The third conductor is separated from the second fluid-permeable conductor construction by the first insulation layer and the subsequent second insulation layer.

The first insulation layer is porous to chemicals particularly hydrocarbon products but non-porous to liquid water-based products. This insulation layer is preferably a hydrophobic microporous material. The second insulation layer allows both water and chemicals to permeate through it. The second conductor is fluid-permeable conductor construction. The final insulating material covers all the other layers.

In operation, penetration of liquid chemical products, particularly hydrocarbon products, through all the layers to the first, or primary, conductor causes the dielectric constant of the third porous insulation to change, thus causing the characteristic impedance of the first circuit to change without adversely affecting the operation of the second circuit. Likewise, water entering the porous material that makes the other, second insulation causes the dielectric constant of the insulation between the second and third conductor to change. As a result, a change in the characteristic impedance allows detection and location of leaks.

### DETAILED DESCRIPTION OF THE INVENTION

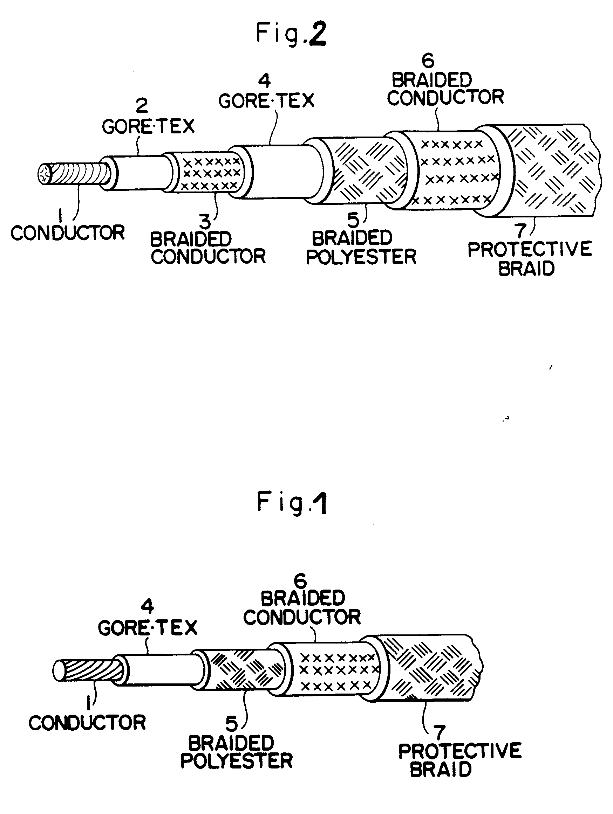

This invention uses time domain reflectometry (TDR) pulse reflectance to determine leaks of chemical products, especially hydrocarbon products, or water. Changes in the characteristic impedance of the cable due to changes in the dielectric constant of the insulation between two conductors, in the circuit are employed to discover and locate the leaks. Referring to the drawings, Figure 1 is a perspective view, partly in cross-section, that illustrates a first embodiment of the invention. Figure 2 represents a second embodiment of the invention.

Referring to Figure 1, which depicts a first embodiment of the invention, first primary core conductor 1, is surrounded by hydrophobic, microporous first insulation 4. A second insulation 5 surrounds the first insulation 4.Fluid-permeable second conductor construction 6 surrounds the second insulation 5 and protective insulation 7 surrounds the second conductor construction 6. Elements 1, 4, 5, 6 and 7 are made of the same materials as elements 1, 4, 5, 6 and 7 of Figure 2. This construction is commonly used for detection and location of liquid and water solution leaks.

In Figure 2, the first core, or primary, conductor 1, which can be a solid copper wire, or a plated wire, or a stranded wire, is enclosed in a third porous insulator 2. By "porous" herein is meant an insulator that is porous to liquid chemical products such as organic solvents, oils and petroleum products. Thus, third insulation 2 can be a layer of polyolefin such as polyethylene or polypropylene, or can be a porous polytetrafluoroethylene. Preferably, third insulation 2 is expanded, microporous polytetrafluoroethylene (EPTFE). This material is described in US patent 3,953,566. This material is preferred because its porosity can be controlled during manufacture by varying the number of voids, thus enabling materials of varying porosity to be used as desired in a particular end-use. Third insulation 2 can be applied to first conductor 1 by any usual means. For example, it can be wrapped around first conductor 1 in the form of a tape; or, it can be extruded onto the wire of the first conductor 1. In the case of the preferred insulation, EPTFE, it can be applied as a porous sintered tape or by paste extruding PTFE resin onto the wire and expanding and sintering it to achieve the requisite porosity and mechanical strength.

The third conductor 3 of the cable of this invention is fluid-permeable, thus allowing the passage of liquid chemicals, and particularly hydrocarbons. It is preferably made of a braided conductive metal construction. The construction can be made up of braided bundles of copper wire; braided bundles of copper wire and a porous material, such as the EPTFE described above; or of a conductive metal layer that has been perforated to provide porosity. Preferably the construction is made of braided bundles of copper wire and strands of EPTFE.

The first conductor 1 and the third conductor 3 make up the first circuit of this cable construction of the invention.

Surrounding the third conductor 3 is a first layer of insulation 4. This first layer of insulation is porous to the chemicals as described above, and is also hydrophobic, i.e., it does not permit passage of liquid water. This first insulative layer 4 must therefore be selective in its porousness. Such materials can be microporous polyolefins such as polyethylene or polypropyline. Preferably however, this layer will be the same EPTFE described as for third insulation layer 2.

A second layer of insulation 5 is applied to the first layer 4. Its purpose is to be porous, so as to pass chemicals on through to the first conductor 1; but this second insulation layer 5 is not hydrophobic. This layer 5 permeates liquid water so as to provide a change in dielectric between third conductor 3 and second conductor 6. Second insulation 5 can be any porous liquid water permeating material such as polyester or polytetrafluoroethylene braid or woven material. Preferably it is a polyester braid construction.

Second Conductor 6 along with third conductor 3 make up the second circuit of this cable construction of the invention. In can be any of the materials described for third conductor 3, but preferably is the same as the preferred material of third conductor 3.

Lastly, a protective overlayer of insulation 7 is provided. It is a porous, i.e, porous to chemicals, especially hydrocarbons, and water, material such as polyethylene or polyester, and can be woven, but preferably is braided or netted to aid in porosity and water permeability.

As explained above, hydrocarbon products or other chemical liquids are capable of penetrating through all the layers of the cable and will permeate into third insulator 2. This result in a change in the dielectric constant of third insulator 2 and a related change in the characteristic impedance of the first circuit. Water on the other hand, will penetrate the outer layers 7, 6 and 5 of the cable and will cease its penetration when it reaches the hydrophobic first insulation layer 4. As a result, the dielectric constant of the area between conductors 3 and 6 changes, allowing the electronic detection and location of a water leak. This is done without the shorting of the circuit between conductors 3 and 6 and enables the system to detect and locate multiple leaks along the length of the cable.

The features of the cables of this invention are unique because they allow the same cable to detect and locate multiple chemical and/or water leaks through concurrent circuits within the same cable. In use, detection is made possible by laying the cable of this invention either along an underground pipeline or storage tank, an above ground pipeline or storage tank, or within the interstitial space of double walled pipes or tanks. Water vapor, usually in the form of humidity, is not detected by the cable circuitry because the dielectric constant of gases are too low (usually less than 1.03 Er) and, accordingly if present, will not have a measurable effect on the detection cable. After use, in most instances, the cable can be cleaned, stored and reused, as needed.

Typical non-conductive chemical products that can be sensed by devices of the invention include non-conductive solvents such as ketones, aromatic organic compounds, alcohols, chlorinated hydrocarbons, turpentine, and the like; vegetable oils, such as olive oil, soya oil, linseed oil, and the like; and non-conductive hydrocarbon products such as crude oils, gasoline, kerosene, diesel fuel and the like. Typical water solution and mixtures include salt solutions, acid solutions and alkaline solutions.

In one embodiment of the invention first conductor 1 was AWG 16 (19/29) nickel plated copper wire. Third insulation 2 was made of EPTFE as described further above. The construction was about 0.135 inches in diameter.

Third conductor 3 was a braided combination of strands of AWG 38 nickel plated copper wire braid (50% nominal coverage).

First insulation 4 was of EPTFE as described immediately above.

Second insulation 5 was a polyester braided thread.

Second conductor 6 was the same as third conductor 3.

Protective insulation 7 is made of the same material as the second insulation 5.

In use, because both detection of water and of oil operate on the basis of dielectric changes in insulation between connectors, leakage of chemicals or water into the cable of the invention does not disable the system, i.e., short the system, so as to prevent detection of further leaks at other areas along the cable.

In the drawings, GORE - TEX is a registered trade-mark of W.L. Gore & Associates, Inc.

## Claims

1. A sensor cable for detecting liquid leakage which comprises:
a first and second electrical conductor (1; 6) each in substantially coaxial relation to each other, said first conductor (1) being a core conductor, said second conductor (6) having a construction that is porous enough to permit passage of liquid chemicals and water,
a first insulation layer (4) adjacent to said first conductor (1), said insulation being porous enough to permit passage of liquid chemicals, said insulation being hydrophobic so that it is impermeable to liquid water,
a second insulation layer (5) positioned between said first insulation layer (4) and said second conductor (6), said second insulation layer (5) being water permeable,
a protective insulation cover (7) that is porous enough to permit passage of water and liquid chemicals said cover (7) comprising the outer portion of the cable whereby each successive outer layer surrounds the preceding inner layer.

2. A sensor cable according to claim 1, further comprising a third insulation layer (2) surrounding directly the core conductor (1) and being porous enough to permit passage of liquid chemicals and further comprising a third electrical conductor (3) having a fluid-permeable construction, which permits passage of liquid chemicals, said third conductor (3) being positioned between said third insulation layer (2) and first insulation layer (4).

3. The cable of claim 1 or 2 wherein the first conductor (1) comprises conductive metal, and the second and third conductors (3; 6) comprise a braid containing electrically conductive metallic wires.

4. The cable of claim 3 wherein the braid is comprised of electrically conductive metallic wires braided with strands of a porous plastic material within the wire braid.

5. The cable of any of claims 1 to 4 wherein the first and third insulation layers are comprised of a microporous plastic polymer.

6. The cable of claim 5 wherein the microporous plastic polymer is expanded polytetrafluorehtylene.

7. The cable of any of cliams 1 to 6 wherein the second insulation layer (5) and the protective insulation cover (7) comprise a thermoplastic material.

8. The cable of claim 6 wherein the thermoplastic material is polyester netting.

## Patentansprüche

1. Sensorkabel zum Feststellen von Flüssigkeitsundichtigkeiten, umfassend:
einen ersten und einen zweiten elektrischen Leiter (1; 6), die jeweils in einer etwa koaxialen Beziehung zueinander stehen, wobei der erste Leiter (1) ein Kernleiter ist, der zweite Leiter (6) einen Aufbau besitzt, der ausreichend porös ist, um flüssige Chemikalien und Wasser hindurchlassen zu können,
eine erste Isolierschicht (4) benachbart dem ersten Leiter (1), wobei die Isolierung porös genug ist, um flüssige Chemikalien hindurchzulassen und die Isolierung hydrophob und damit für flüssiges Wasser undurchdringlich ist,
eine zweite Isolierschicht (5), die sich zwischen der ersten Isolierschicht (4) und dem zweiten Leiter (6) befindet und wasserdurchlässig ist,
eine Schutz-Isolierabdeckung (7), die porös genug ist, um Wasser und flüssige Chemikalien durchzulassen, wobei die Abdeckung (7) den äußeren beschnitt des Kabels bildet, wobei jede aufeinanderfolgende äußere Schicht die vorausgehende innere Schicht umgibt.

2. Sensorkabel nach Anspruch 1, außerdem umfassend eine dritte Isolierschicht (2), die den Kernleiter (1) direkt umgibt und porös genug ist, um flüssige Chemikalien durchzulassen, und weiterhin umfassend einen dritten elektrischen Leiter (3) mit fluiddurchlässigem Aufbau, der den Durchgang flüssiger Chemikalien gestattet, wobei der dritte Leiter (3) zwischen der dritten Isolierschicht (2) und der ersten Isolierschicht (4) angeordnet ist.

3. Kabel nach Anspruch 1 oder 2, bei dem der erste Leiter (1) leitendes Metall und der zweite und der dritte Leiter (3; 6) ein elektrisch leitende Metalldrähte enthaltendes Geflecht aufweisen.

4. Kabel nach Anspruch 3, bei dem das Geflecht aus elektrisch leitenden Metalldrähten besteht, die mit Litzen aus porösem plastischen Material innerhalb des Drahtgeflechts verflochten sind.

5. Kabel nach irgendeinem der Ansprüche 1 bis 4, bei dem die erste und die dritte Isolierschicht aus einem mikroporösen Kunststoffpolymer bestehen.

6. Kabel nach Anspruch 5, bei dem das mikroporöse Kunststoffpolymer expandiertes Polytetrafluoräthylen ist.

7. Kabel nach irgendeinem der Ansprüche 1 bis 6, bei dem die zweite Isolierschicht (5) und die Schutz-Isolierabdeckung (7) ein thermoplastisches Material aufweisen.

8. Kabel nach Anspruch 6, bei dem das thermoplastische Material ein Polyesternetz ist.

## Revendications

1. Câble détecteur pour la détection de fuites de liquide qui comprend :
un premier et un deuxième conducteurs électriques (1; 6) chacun dans une relation sensiblement coaxiale l'un par rapport à l'autre, ledit premier conducteur (1) étant un conducteur âme, ledit deuxième conducteur (6) ayant une structure qui est suffisamment poreuse pour permettre le passage des produits chimiques et de l'eau liquides ;
une première couche d'isolant (4) adjacente audit premier conducteur (1), ledit isolant étant suffisamment poreux pour permettre le passage des produits chimiques liquides et ledit isolant étant hydrophobe de sorte qu'il est imperméable à l'eau liquide ;
une deuxième couche d'isolant (5) placée entre ladite première couche d'isolant (4) et ledit deuxième conducteur (6), ladite deuxième couche d'isolant (5) étant perméable à l'eau, et une enveloppe isolante protectrice (7) qui est suffisamment poreuse pour permettre le passage de l'eau et des produits chimiques liquides, ladite enveloppe (7) constituant la partie extérieure du câble, ce par quoi chaque couche extérieure successive entoure la couche intérieure précédente.

2. Câble détecteur selon la revendication 1 comprenant en outre une troisième couche isolante (2) entourant directement le conducteur âme (1) et qui est suffisamment poreuse pour permettre le passage des produits chimiques liquides et comprenant de plus un troisième conducteur électrique (3) ayant une structure perméable aux fluides, qui permet le passage des produits chimiques liquides, ledit troisième conducteur (3) étant situé entre ladite troisième couche d'isolant (2) et ladite première couche d'isolant (4).

3. Câble selon la revendication 1, ou 2, dans lequel le premier conducteur 1 est constitué d'un métal conducteur, et les deuxième et troisième conducteurs (3 ; 6) sont constitués d'une tresse contenant des fils métalliques conducteurs de l'électricité.

4. Câble selon la revendication 3, dans lequel la tresse est constituée de fils métalliques conducteurs de l'électricité tressés, avec des torons d'une matière plastique poreuse à l'intérieur de la tresse de fil.

5. Câble selon l'une quelconque des revendications 1 à 4, dans lequel la première et la troisième couches d'isolant sont constituées d'un polymère de plastique microporeux.

6. Câble selon la revendication 5, dans lequel le polymère de plastique microporeux est du polytétrafluoroéthylène expansé.

7. Câble selon l'une quelconque des revendications 1 à 6, dans lequel la deuxième couche d'isolant (5) et l'enveloppe isolante protectrice (7) sont constituées d'une matière thermoplastique.

8. Câble selon la revendication 6, dans lequel la matière thermoplastique est un maillage de polyester.
